# EUROPEAN PATENT APPLICATION

(11) **EP 1 788 519 A1**
(43) Date of publication of application: **23.05.2007**
(21) Application number: 05292436.2
(22) Date of filing: 16.11.2005
(51) Int. Cl.: G06Q 30/00

(54) **Method for selecting and transmitting background information from an information server to a mobile client**

(71) Applicant: Alcatel Lucent, 75008 Paris (FR)
(72) Inventor: Hahn, Matthias, 73061 Ebersbach (DE)
(74) Representative: Schäfer, Wolfgang

(57) **Abstract**

To provide a system that allows to request background information (5) related to a product (9) that is offered by a shop (10) in a more flexible way and to speed up the process of requesting background information (5) related to the product (9) offered for sale in the shop (10) it is suggested that
- an identification of the product (9) is automatically read in by means that are attached to the mobile client (3),
- the identification is transmitted from the mobile client (3) to the information server (2),
- the information server (2) selects background information (5) related to the product (9), wherein the selection is performed according to at least one criterion predefined by a user,
- the information server (2) causes the selected background information (5) to be transmitted to the mobile client (3) and
- the mobile client (3) causes the background information (5) to be displayed to the user.

## Description

The present invention relates to a method for selecting and transmitting background information from an information server to a mobile client, wherein the information server and the mobile client are connected to a communications network and the background information relates to a product offered in a shop.

The invention also relates to a mobile client that can be connected to a communications network, and to a server that can be connected to a communications network.

Furtheron, the present invention relates to a client-server system comprising a mobile client and an information server, wherein the mobile client and the information server are connected to a communications network and wherein the information server provides background information related to a product offered in a shop.

Moreover, the invention relates to a computer program which can be run on a client-server system, in particular on a mobile client and/or on an information server.

Information servers providing background information to products that can be purchased in a shop are known from the state of the art. Such information servers for example provide information concerning a price comparison of the price of sale of products offered by different shops. A special kind of such information servers are so-called product search engines that allow a user to search for products according to a keyword defined by the user. If the keyword defines a special feature, the product search engine returns information according to the products that match these features. In addition, a product search engine provides further information to a product, e.g. the price of sale or the results of a product test. To access this kind of background information, the user needs a client that is enabled to establish a data link to the information server. The data link typically is realized via a communications network.

Typically, information servers of the above-mentioned kind communicate with a client via the internet. The client is a personal computer, e.g. a notebook, that is connected to the internet. To access the background information provided by an information server, a user has to transmit an appropriate request to the information server. Therefore, a special software, the so-called browser, is implemented on the client. The user can input a so-called URL ("Uniform Resource Locator") which identifies the information server. If the information server is a product search engine, the information server in return transmits a so-called network page to the client via the internet. The network page typically contains an input field that allows the user to specify a request for background information. The user then causes the client to transmit the request for background information to the information server. In return, the information server transmits a network page that contains the requested information.

To describe the content of a network page, the standardized page-description language HTML ("Hypertext Markup Language") is mainly used today. Thus, if a client requests information from an information server, the information server transmits an HTML-document containing the requested information to the client.

In the domain of the internet, an information server can be realized as a so-called web-server. A web-server is a kind of information server that provides information according to the protocols that are part of the WWW ("Worldwide Web"), which in turn is part of the internet.

Requesting background information from an information server using a personal computer is very inflexible, since the user usually needs a fixed line connection to the internet. This is often not available, especially if the user is in a shop and would like to have background information to a product that is offered by the shop.

To overcome this drawback it is well-known to establish a mobile connection to the internet using a mobile client, e.g. via a mobile telecommunication device. This enables to request background information from an information server using the mobile telecommunication device, wherein the background information refers to a product that is offered in a shop. Since the mobile telecommunication device has to be mobile, it is of small size. This especially makes the communication to an information server difficult, since usually the mobile telecommunication device does not provide a sufficient input device like the keyboard of a personal computer.

Furtheron, the mobile telecommunication device only comprises a display of very limited size, so that network pages that are typically provided for request via the internet cannot be displayed satisfactorily.

Although a special protocol for data transmission between a server and a wireless client, the so-called WAP ("Wireless Application Protocol"), exists, this protocol is not in widespread use. One reason for this is that a special software has to be implemented on the mobile telecommunication device. Another reason is that an information server would have to provide information according to two different protocols, namely the HTTP ("Hypertext Transfer Protocol") and the WAP. Since the network pages that are transmitted from an information server to a client or a mobile client are often generated dynamically, it would be inefficient, if the information server had to decide, whether the network page has to be generated according to the WAP or the HTTP.

In addition, a mobile telecommunication device usually only allows the input of the information necessary to identify a product in an uncomfortable way.

It is, therefore, an object of the present invention to provide a system that allows to request background information related to a product that is offered by a shop in a more flexible way. In particular, it is an object of the present invention to speed up the process of requesting background information related to a product offered for sale in a shop.

The object is solved by a method as mentioned above, wherein
- an identification of the product is read in automatically by means that are attached to the mobile client,
- the identification is transmitted from the mobile client to the information server,
- the information server selects background information related to the product, wherein the selection is performed according to at least one criterion predefined by a user,
- the information server causes the selected background information to be transmitted to the mobile client, and
- the mobile client causes the information to be displayed to the user.

The identification of the product can be for example an EAN ("European Article Number") that is attached to the product and coded as a bar code. If a bar code scanner is attached to the mobile client, the bar code representing the EAN of the product can be read in automatically. The identification is then transmitted from the mobile client to the information server.

This can be performed automatically or at least almost automatically by using an appropriate software element that is implemented on the mobile client. The software element for example can cause the identification to be transmitted to the information server without any interaction of the user. The software element can also cause the identification to be displayed on the mobile client and allow the user of the mobile client to initiate the transmission of the identification to the information server by simply pressing a predefined button.

The background information can be stored for example in a database that can be accessed from the information server. The information server receives the identification and selects background information related to the product. Therefore, the information server evaluates the identification. In addition, the background information is selected according to a predefined criterion. This criterion allows the user to limit the amount of background information that is to be transmitted from the information server to the mobile client. One possible criterion could define for example the age of the background information. This would for example imply attaching an age-related information to each piece of background information. The selected background information is then transmitted from the information server to the mobile client and displayed to the user.

The inventive method allows to request information related to a product that is offered in a shop in a very efficient way, since the user has no need to manually input an identification of the product for requesting background information.

Furtheron, the inventive method allows to limit the amount of background information that is to be transmitted from the information server to the mobile client. This means that only such background information is transmitted to the mobile client that is likely to be of a high interest to the user.

According to a preferred embodiment of the present invention, the identification of the product is provided via an RFID and the client comprises an RFID-reader. An RFID ("Radio Frequency Identification") can be used for automatic data capture that allows a contactless identification of products using radio frequency (RF).

This embodiment can be realized by attaching an RFID-transponder to each product offered in the shop or at least by attaching an RFID-transponder to each group of different products. An RFID-reader is attached to the mobile client. The RFID-transponder represents the actual identification carrying device. It typically consists of a coupling element and an electronic microchip. The RFID-transponder usually does not possess own voltage supply. Therefore, when the RFID-transponder is not within the response range of an RFID-reader, the RFID-transponder is totally passive. If the RFID-reader comes within the response range of the RFID-transponder, the RFID-transponder is activated. This causes the RFID-transponder to transmit the identification that is stored within the microchip. Therefore, the RFID-transponder comprises a large area coil that functions as an antenna. Due to the principle of induction the identification can be transmitted from the RFID-responder to the RFID-reader.

According to another preferred embodiment, the mobile client provides the functionality of a mobile telecommunications device. Advantageously, the communications network is realized as a cellular network, in particular a cellular network according to the UMTS-, the GSM-, or the GPRS-standard.

Using a mobile telecommunications device, for example a mobile phone or a smart phone, can be advantageous, since most people already carry such a mobile telecommunications device while they are shopping. This means, that the inventive method can be implemented with little effort by simply attaching an RFID-reader to the mobile phone and implementing an appropriate software on the mobile phone.

Advantageously, the available background information related to each product is categorized and the criterion describes at least one category. Such a category can define for example a test result, a price of sale, a list of ingredients, or an alternative shop offering the product. This means, that the user can specify with great detail which kind of background information he wants the information server to transmit to the mobile client. This allows to only transmit the background information from the information server to the mobile client the user is really interested in. Thus, the transmission of the background information from the information server to the mobile client is speeded up, since the amount of data can be reduced. This furtheron allows to reduce the load of the communications network.

Preferably, the criterion is predefined by the user using the mobile client or a further client and stored on the information server or a data base that can be accessed by the information server. A further client can be for example another mobile telecommunications device or another smart phone. The further client can also be a personal computer that is attached to the user. The data base can in particular be designed as a server that is connected to the communications network.

Advantageously, the information server is connected to the internet and the criterion is predefined by the user using the mobile client or a further client that is connected to the internet. This allows to use well-known protocols for establishing a communication link between the information server and the mobile client or the further client to set or vary the criterion that is used to select the background information. It is conceivable, that the mobile client establishes a connection to the internet via a service that is offered from a cellular network.

Advantageously, the information server provides a list of criteria and the user predefines one or more criteria by selecting the appropriate criteria from the list of criteria. This enables a very fast and efficient way for the user to define the set of criteria that have to be considered when the background information is selected.

The object is also solved by a mobile client that can be connected to a communications network, wherein the mobile client is designed to execute the inventive method.

Furtheron, the object is solved by an information server that is connected to a communications network wherein the information server is designed to execute the inventive method.

Moreover, the object is achieved by a client-server system as mentioned above, wherein the client-server system is designed to execute the inventive method.

The realization of this invention in the form of a computer program is particularly important. The computer program can be run on at least one calculating device or a computer, in particular on an information server and/or on a mobile client, wherein the computer program is programmed to carry out the inventive method. Parts of the computer program may be run on different computers in order to carry out the inventive method. The invention is, thereby, realized by the computer program, wherein this computer program represents the invention in the same sense as the method for the execution of which the computer program is suitable. The computer program is preferably stored in a storage element. A storage element may in particular be a random-access-memory, a read-only-memory, a hard disc, or an optical storage medium like a compact disc (CD) or a digitally versatile disc (DVD).

Further features, applications and advantages of the invention will become apparent from the following description of exemplary embodiments of the invention that are shown in the drawing. There, all described and shown features separately or in any combination represent the subject-matter of the invention, independently of the wording in the description or the representation in the drawing and independently of the combination in the claims or the dependencies of the claims.
- Fig. 1: shows a first embodiment of a client-server system suited to execute the inventive method;
- fig. 2: shows a second embodiment of a client-server system suited to execute the inventive method; and
- fig. 3: shows a flow diagram of an embodiment of the present invention.

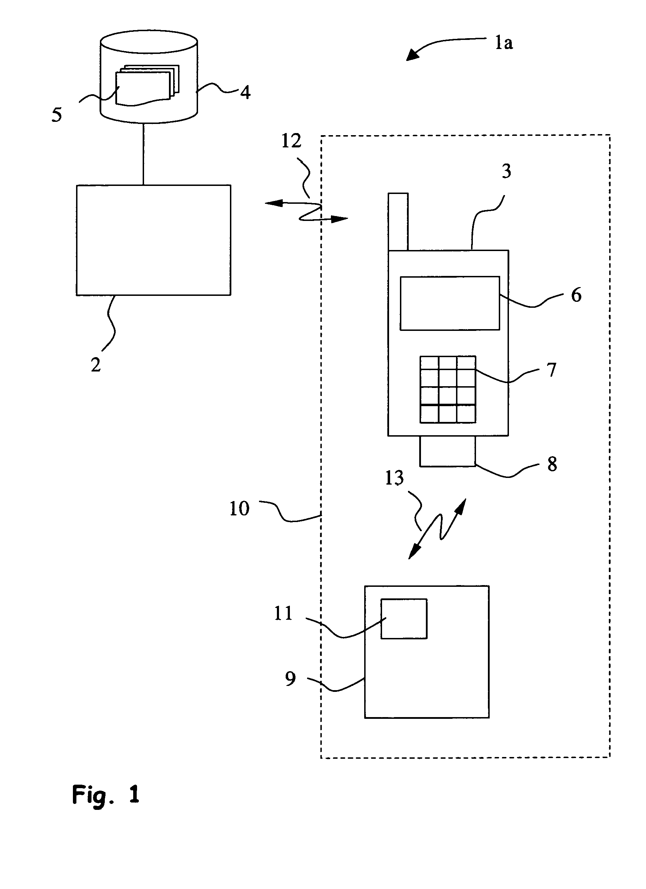

Fig. 1 shows a client-server system 1a that comprises an information server 2 and a mobile client 3. A database 4 is attached to the information server 2. In the database 4 background information 5 are stored.

The mobile client 3 comprises a display 6 and a keypad 7. A RFID-reader 8 is attached to the mobile client 3. The mobile client 3 could provide a connector or a socket that is designed such that a RFID-reader device can be plugged into. It is also conceivable, that the RFID-reader 8 is connected to the mobile client 3 via a wireless communications network, e.g. according to the bluetooth standard. Furtheron, it is conceivable that the RFID-reader 8 is a built-in component of the mobile client 3.

Fig. 1 further shows a product 9 that is offered in a shop 10 for sale. The shop 10 is indicated by a dashed line. A RFID 11 is attached to the product 9. This could be done, for example, by including the RFID 11 into a price label. It is further conceivable, that the RFID 11 is loosely attached to the product 9 or that all products of the same kind that are for example located in a rack share one RFID 11 that is, for example, fixed on the rack. The RFID comprises at least the RFID-transponder as described above.

The mobile client 3 communicates with the information server 2 via a first communications network 12. The communications network 12 can be realized as a cellular telecommunications network, e.g. according to the UMTS- or the GSM-standard. The RFID-reader 8 communicates with the RFID 11 via a radio frequency based communications link 13.

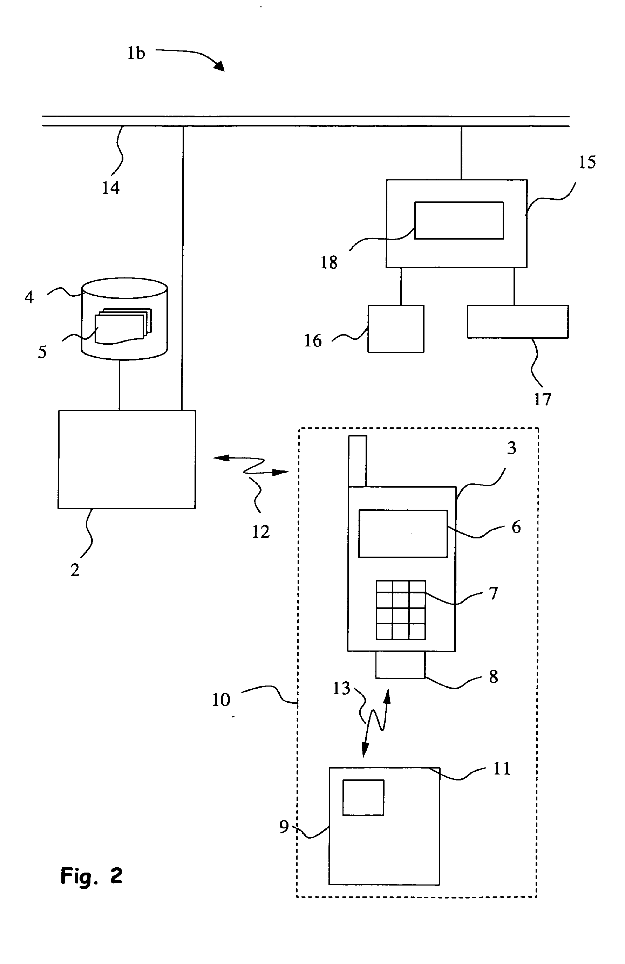

Fig. 2 shows a client-server system 1b. Components of the client-server system 1b that correspond to components of the client-server system 1a are denoted by the same reference numbers.

The client-server system 1b comprises the mobile client 3 and the information server 2. The information server 2 as shown in fig. 2 is connected to a fixed communications network, e.g. the internet 14. The client-server system 1b also comprises a further client 15, e.g. a personal computer that is also connected to the internet 14. A display 16 and a keyboard 17 are attached to the further client 15. On the further client 15 a browser 18 is implemented.

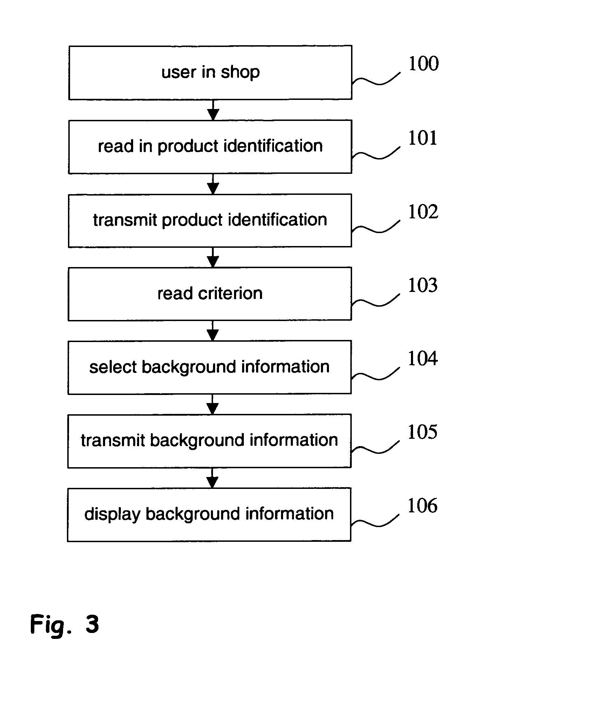

Fig. 3 shows a flowchart according to an embodiment of the inventive method. This flowchart is used to describe the operating mode of the client-server systems 1a and 1b.

The method starts in a step 100, where the user is in a shop 10. The shop 10 can be for example a grocery, a supermarket, a shoe shop or the like. In the step 100 the user registers a product that he wants more information about. These information are stored as the background information 5 in the database 4. Thus, the user has to transmit a request to the information server 2.

In a step 101 the user collects an identification of the product. The identification is stored within the RFID 11 that is located near or attached to the product 9. The user takes his mobile client 3, for example a mobile phone, to which the RFID-reader 8 is attached and approaches the product 9 and thus the RFID 11, until the RFID-transponder is activated by the RFID-reader 8. This causes the product identification that is stored in the RFID 11 to be read by the RFID-reader 8 via the radio frequency based communications link 13.

In a step 102 the product identification is transmitted from the mobile client 3 to the information server 2. This can be performed totally automatically which means, that whenever the RFID-reader 8 reads a product identification, it is automatically transmitted to the information server 2.

It is also conceivable, that the product information is only transmitted from the mobile client 3 to the information server 2, when the user presses a predefined button on the keypad 7. Therefore, a message can be displayed on the display 6 that asks the user to press the specified button.

In a step 102 the product identification is transmitted from the mobile client 3 to the information server 2 via the communications network 12. The communications network 12 can be for example an UMTS-network. The number that usually has to be dialled to install a data connection via such a communications network 12 can be dialled automatically whenever the user causes the mobile client 3 to transmit the product identification.

It is further conceivable, that the mobile client 3 automatically transmits an identification number to the information server 2, wherein the identification number identifies the user or at least the mobile client 3. Such an identification number can be for example a mobile phone number that is assigned to the user or the mobile client 3.

In a step 103 the information server 2 reads the criterion that is predefined by the user. For the preceding process of predefining one or more criteria, the information server 2 can provide a special interface, for example a portal, that can be accessed via the internet 14. Therefore, the user requests a network page with the further client 15 from the information server 2. The information server 2 causes the requested network page to be transmitted to the further client 15. The network page, for example an HTML-document, is then interpreted by the browser 18 and displayed to the user via the display 16. Predefining one or more criteria is usually done before the user goes into the shop 10. But it must be emphasized, that it is also conceivable, that the user changes the set of predefined criteria when he is in the shop 10, already. For this, it is conceivable, that the information server 2 provides a WAP-document that can be requested by the mobile client 3 and allows to alter the set of criteria and to cause the information server 3 to use the altered set of criteria from now on.

The network page can comprise a list of criteria that can be selected by the user. These criteria can for example describe different categories of background information, like a price, a list of ingredients, test results or comparisons with other products. The user selects which criteria have to be considered when he requests background information. For example, the user selects the criterion according to the price of a product and the criterion according to a list of ingredients. Then the user causes the network page to be transmitted to the information server 2 which then updates the list of criteria that are attached to the user. The process of predefining the criteria is typically done using a personal computer that is connected to the internet 14. But is also conceivable, that the process of predefining the criteria is done using the mobile client 3 for example via the communications network 12.

Although the criteria are typically predefined, it is also conceivable, that the user defines the criteria during the process of shopping, which means while the user is in the shop 10.

However, the information server 2 reads the actual list of criteria that are predefined by the user.

In a step 104 the information server 2 selects the background information 5 that is stored in the database 4. It is conceivable, that the predefined criteria are also stored in the database 4. According to the product identification the information server 2 selects the information that belongs to the product 9. Then the information server 2 uses the predefined criteria to filter the background information that are of interest to the user and causes this background information to be transmitted via the communications network 12 to the mobile client 3 in a step 105.

In a step 106 the mobile client 3 causes the background information to be displayed on the display 6.

The inventive method as shown in fig. 3 allows a user to fast access background information according to a product 9. This is achieved by automatically reading the product information and automatically transmitting this information to the information server 2 where the background information is selected and retransmitted to the mobile client 3, automatically. Due to the predefined criteria the amount of data that has to be transmitted from the information server 2 to the mobile client 3, can be limited to only transmit these types of background information that are of current interest to the user.

Further embodiments of the inventive method and the inventive components of the client-server systems 1a, 1b are conceivable.

For example it is conceivable, that the background information is transmitted from the information server 2 to the mobile client 3 using another transmission protocol, for example using a SMS ("Short Message Service") or a e-mail.

It is further conceivable, that the mobile client 3 and/or the further client 15 are realized as a notebook or a PDA ("Personal Digital Assistant").

As a matter of course the information server 2 can comprise several different servers and several databases. In particular, the information server 2 can be distributed on different servers that are connected e.g. via the internet 14.

## Claims

1. Method for selecting and transmitting background information (5) from an information server (2) to a mobile client (3), wherein the information server (2) and the mobile client (3) are connected to a communications network (12) and the background information (5) relates to a product (9) offered in a shop (10), **characterized in that**
- an product identification of the product (9) is automatically read in by means that are attached to the mobile client (3),
- the product identification is transmitted from the mobile client (3) to the information server (2),
- the information server (2) selects background information (5) related to the product (9), wherein the selection is performed according to at least one criterion predefined by a user,
- the information server (2) causes the selected background information (5) to be transmitted to the mobile client (3) and
- the mobile client (3) causes the background information (5) to be displayed to the user.

2. The method of claim 1, **characterized in that** the product identification is provided via an RFID (11) and the mobile client (3) comprises an RFID-reader (8).

3. The method of claim 1 or 2, **characterized in that** the mobile client (3) provides the functionality of a mobile telecommunications device.

4. The method according to any one of the preceding claims, **characterized in that** the communications network (12) is realized as a cellular network, in particular a cellular network according to the UMTS-, the GSM-, or the GPRS-standard.

5. The method according to any one of the preceding claims, **characterized in that** the available background information (5) related to each product (9) is categorized and the criterion describes at least one category.

6. The method of claim 5, **characterized in that** the category defines a test result, a price of sale, a list of ingredients, or an alternative shop (10) offering the product (9).

7. The method according to any one of the preceding claims, **characterized in that** the criterion is predefined by the user using the mobile client (3) or a further client (15) and that the criterion is stored in a data base that can be accessed by the information server (2).

8. The method according to any one of the preceding claims, **characterized in that** the information server (2) is connected to the Internet (14) and the criterion is predefined by the user using the mobile client (3) or a further client (15) that is connected to the Internet (14).

9. The method according to any one of the preceding claims, **characterized in that** the information server (2) provides a list of criteria and the user predefines one or more criteria by selecting the appropriate criteria from the list of criteria.

10. Mobile client (3) that can be connected to a communications network (12) **characterized in that** the mobile client (3) comprises means to execute a method according to any one of the claims 1 to 9, if the mobile client (3) is operated in a client-server system (1a; 1b).

11. Information server (2) connected to a communications network (12), **characterized in that** the information server (2) comprises means to execute a method according to any one of the claims 1 to 9, if the server is operated in a client-server system (1a; 1b).

12. Client-server system (1a; 1b) comprising a mobile client (3) and an information server (2), wherein the mobile client (3) and the information server (2) are connected to a communications network (12), and wherein the information server (2) provides background information (5) related to a product (9) offered in a shop (10), **characterized in that** the client-server system (1a; 1b) comprises means to execute a method according to any one of the claims 1 to 9.

13. Computer program that can be executed on a client-server system (1a; 1b), in particular on a mobile client (3) and/or on an information server (2), **characterized in that** the computer program is programmed to execute a method according to any one of the claims 1 to 9.

14. The computer program of claim 13, wherein the computer program is stored on a memory element and wherein the memory element is a hard disk, a compact disk (CD), a digitally versatile disk (DVD), and/or at least one part of a RAM or a ROM that is assigned to at least one component of the client-server system (1a; 1b).
